# EUROPEAN PATENT SPECIFICATION

(11) **EP 2 617 892 B1**
(45) Date of publication and mention of the grant of the patent: **19.09.2018**
(21) Application number: 12007512.2
(22) Date of filing: 30.10.2008
(51) Int. Cl.: D06M 15/643, D06M 15/647, D06M 15/65, D06M 15/513, A01N 25/30, A61K 8/58, A61K 8/86, A61K 8/898, C02F 1/68, C09D 171/02, C09D 183/04, C08F 136/06, C08F 8/32, C08G 65/48, C08G 77/388

(54) **Textiles treated with copolymers of epoxy compounds and amino silanes**
Mit Copolymer von Epoxyverbindungen und Aminosilanen behandelte Textilien
Textiles traités au moyen de copolymères de composés époxy et amino silanes

(30) Priority: 02.11.2007 US 984753 P; 25.08.2008 US 197367
(43) Date of publication of application: 24.07.2013
(62) Divisional of application: 08848440.7
(73) Proprietor: Momentive Performance Materials Inc., Waterford, NY 12188 (US)
(72) Inventor: Falk, Benjamin, Yorktown Heights, NY 10598 (US)
(74) Representative: Herrmann, Uwe

(56) References cited:
- EP-A- 1 116 813
- CA-A- 866 244
- GB-A- 1 296 136
- GB-A- 1 491 747
- JP-A- 50 048 293
- JP-A- H05 214 216
- JP-A- S54 129 098
- JP-A- 2005 281 528
- US-A- 4 972 008
- US-A- 5 206 285
- US-A- 5 786 032

## Description

### CROSS-REFERENCE TO RELATED APPLICATIONS

This application claims priority to US provisional patent application serial number 60/984753 filed November 2, 2007.

### FIELD OF THE INVENTION

The present invention relates to novel copolymers formed as the reaction product of epoxy compounds and amino silanes.

### BACKGROUND OF THE INVENTION

US patent 4,062,999 A describes a process for treating textile fibers with a mixture of an amino functional silane and an epoxy functional silicone. The unreacted mixture is applied to the fiber then heat treated in an oven.

US patent 4,359,545 A describes the process of reacting an amino functional silicone and an epoxy functional silicone onto a textile surface. The blend is applied to a textile then heat-treated in an oven.

US patent 5,384,340 describes the use of a moisture and or photo curable coatings system. The process involves first reacting an epoxy or methacryl functional silane with an excess of an amino functional silicone. The remaining unreacted amino groups are then reacted with an epoxy or isocyano functional vinyl containing molecule. The resulting material contains both moisture curable alkoxy silane groups and free radical curable vinyl groups.

EP 1,116,813A1 describes a textile treatment composition containing siloxanes having epoxy- and glycol- functionalities and either an aminosilane or a silicone quaternary ammonium compound. The composition is preferably formulated as an aqueous emulsion. The emulsion is applied to the textile surface followed by heat treatment to cure the mixture.

US patent 5,102,930 A describes a silicone-based fabric finishing agent that is suitable for finishing a fabric material containing keratinous fibers, e.g., wool. The fabric finishing agent is an aqueous emulsion of a hydroxy- containing organopolysiloxane with an admixture of a mixture of colloidal silica and a reaction product of an amino-functional alkoxy silane or a hydrolysis product thereof with an acid anhydride, an epoxy-functional alkoxy silane compound and a curing catalyst.

US patent 6,475,568 B1 describes the synthesis of non-crosslinkable silicone polyether non-(AB)n materials that do not contain silane or reactive groups.Modified silicones can exhibit a variety of physical properties. The polymers can be modified to be hydrophilic, lipophilic and hydrophobic depending on the nature of the organic substituents. Recently, linear alternating copolymers and linear random copolymers have been made using alkyl or polyether, and polydimethylsiloxane units. These materials have shown utility in a variety of applications including personal care (hair conditioners, skin care and color cosmetics), textile treatments, hard surface modifiers, agricultural adjuncts, and the like. Unfortunately these materials are liquids and show limited durability when applied to a surface.

### SUMMARY OF THE INVENTION

The present invention provides for a composition comprising the reaction product of
a) an oxirane or oxetane polyether comprising at least two
   oxirane or oxetane
   groups wherein the polyether has the formula:

   R²⁶O(R²⁷)γ(C2H4O)δ(C3H60)ε(C4H8O)_{ζ}R²⁸

   where R²⁶ and R²⁸ are independently a monovalent hydrocarbon radical containing one or more oxirane or oxetane moieties having from 3 to 12 carbon atoms; R²⁷ is selected from the group of divalent radicals consisting of

   -C2H4O-, -C3H6O-, and -C4H8O-;

   the subscript γ is zero or 1; the subscript δ is zero or positive and has a value ranging from 0 to about 100 subject to the limitation that (δ + ε + ζ) > 0; the subscript ε is zero or positive and has a value ranging from 0 to about 100 subject to the limitation that (δ + ε + ζ) > 0; the subscript ζ is zero or positive and has a value ranging from 0 to about 100 subject to the limitation that (δ + ε + ζ) > 0; and
b) an amino silane having the formula:

   N(H)(R¹)R²Si(OR³)_{3-a-b-c}(OR⁴)ₐ(R⁵Si(OR⁶)_{d}(R⁷)ₑ)_{b}R⁸_{c}

   with R¹ is chosen from the group consisting of H or a monovalent hydrocarbon radical containing one to 20 carbon atoms;
   R² is selected from a group consisting of a divalent linear or branched hydrocarbon radical consisting of 1-60 carbons;
   R⁴ is a hydrocarbon radical that contains 3 to 200 carbon atoms;
   R⁵ is selected from a group consisting of oxygen or a divalent linear or branched hydrocarbon radical consisting of 1-60 carbons;
   R³, R⁶, R⁷, and R⁸ and are each independently selected from the group of monovalent linear or branched hydrocarbon radicals having from 1 to 200 carbon atoms;
   the subscript b is zero or a positive number and has a value ranging from 0 to 3;
   the subscripts a, and c are zero or positive and have a value ranging from 0 to 3 subject to the limitation that (a + b + c) ≤ 3;
   the subscripts d and e are zero or positive and have a value ranging from 0 to 3 subject to the limitation that (d + e) ≤ 3.

### DETAILED DESCRIPTION OF THE INVENTION

The present invention provides for a composition comprising the reaction product of
a) an oxirane or oxetane polyether comprising at least two oxirane or oxetane groups wherein the polyether has the formula:

   R²⁶O(R²⁷)γ(C2H4O)δ(C3H6O)ε(C4H8O)ζR28

   where R²⁶ and R²⁸ are independently a monovalent hydrocarbon radical containing one or more oxirane or oxetane moieties having from 3 to 12 carbon atoms; R²⁷ is selected from the group of divalent radicals consisting of -C2H4O-, -C3H6O-, and -C4H8O-; the subscript γ is zero or 1; the subscript δ is zero or positive and has a value ranging from 0 to about 100 subject to the limitation that (δ + ε + ζ) > 0; the subscript ε is zero or positive and has a value ranging from 0 to about 100 subject to the limitation that (δ + ε + ζ) > 0; the subscript ζ is zero or positive and has a value ranging from 0 to about 100 subject to the limitation that (δ + ε + ζ) > 0; and
b) an amino silane having the formula:

   N(H)(R¹)R²Si(OR³)_{3-a-b-c}(OR⁴)ₐ(R⁵Si(OR⁶)_{d}(R⁷)ₑ)_{b}R⁸_{c}

   with R¹ is chosen from the group consisting of H or a monovalent hydrocarbon radical containing one to 20 carbon atoms;
   R² is selected from a group consisting of a divalent linear or branched hydrocarbon radical consisting of 1-60 carbons;
   R⁴ is a hydrocarbon radical that contains 3 to 200 carbon atoms;
   R⁵ is selected from a group consisting of oxygen or a divalent linear or branched hydrocarbon radical consisting of 1-60 carbons;
   R³, R⁶, R⁷, and R⁸ and are each independently selected from the group of monovalent linear or branched hydrocarbon radicals having from 1 to 200 carbon atoms;
   the subscript b is zero or a positive number and has a value ranging from 0 to 3;
   the subscripts a, and c are zero or positive and have a value ranging from 0 to 3 subject to the limitation that (a + b + c) ≤ 3;
   the subscripts d and e are zero or positive and have a value ranging from 0 to 3 subject to the limitation that (d + e) ≤ 3;

Disclosed herein are reaction product compositions where the oxirane or oxetane compound is selected from the group consisting of siloxanes, hydrocarbons and polyethers particularly where the oxirane or oxetane compound is a siloxane having the formula:

M_{f}M^{E}ₕM^{PE}ᵢM^{H}ⱼDₖD^{E}ₗD^{PE}ₘD^{H}ₙTₒT^{E}ₚT^{PE}_{q}T^{H}ᵣQₛ

with
M = R⁹R¹⁰R¹¹SiO_{1/2};
M^{H} = R¹²R¹³HSiO_{1/2};
M^{PE} = R¹²R¹³(-CH₂CH(R¹⁴)(R¹⁵)ₜO(R¹⁶)ᵤ(C₂H₄O)ᵥ(C₃H₆O)_{w}(C₄H₈O)ₓR¹⁷)SiO_{1/2};
M^{E} = R¹²R¹³(R^{E})SiO_{1/2}
D = R¹⁸R¹⁹SiO_{2/2}; and
D^{H} = R²⁰HSiO_{2/2}
D^{PE} = R²⁰(-CH₂CH(R¹⁴)(R¹⁵)ₜO(R¹⁶)ᵤ(C₂H₄O)ᵥ(C₃H₆O)_{w}(C₄H₈O)ₓR¹⁷)SiO_{2/2}
D^{E} = R²⁰R^{E}SiO_{2/2}.
T = R²¹SiO_{3/2};
T^{H} = HSiO_{3/2};
T^{PE} = (-CH₂CH(R¹⁴)(R¹⁵)ₜO(R¹⁶)ᵤ(C₂H₄O)ᵥ(C₃H₆O)_{w}(C₄H₈O)ₓR¹⁷)SiO_{3/2};
TE = R^{E}SiO_{3/2}; and
Q = SiO_{4/2};
where R⁹, R¹⁰, R¹¹, R¹², R¹³, R¹⁸, R¹⁹, R²⁰, and R²¹ are each independently selected from the group of monovalent hydrocarbon radicals having from 1 to 60 carbon atoms;
R¹⁴ is H or a 1 to 6 carbon atom alkyl group; R¹⁵ is a divalent alkyl radical of 1 to 6 carbons; R¹⁶ is selected from the group of divalent radicals consisting of -C₂H₄O-, -C₃H₆O-, and -C₄H₈O-; R¹⁷ is H, a monofunctional hydrocarbon radical of 1 to 6 carbons, or acetyl;
R^{E} is independently a monovalent hydrocarbon radical containing one or more oxirane or oxetane moieties having from one to sixty carbon atoms;
the subscript f may be zero or positive subject to the limitation that when the subscript f is zero, h must be positive;
the subscript h may be zero or positive subject to the limitations that when h is zero, the subscript f must be positive, and that the sum of the subscripts h, l and p is positive;
the subscript k is zero or positive and has a value ranging from about 0 to about 1,000;
the subscript 1 is zero or positive and has a value ranging from about 0 to about 400 subject to the limitation that the sum of the subscripts h, l and p is positive;
the subscript o is zero or positive and has a value ranging from 0 to about 50;
the subscript p is zero or positive and has a value ranging from 0 to about 30 subject to the limitation that the sum of the subscripts h, 1 and p is positive;
the subscript s is zero or positive and has a value ranging from 0 to about 20;
the subscript i is zero or positive and has a value ranging from 0 to about 20;
the subscript m is zero or positive and has a value ranging from 0 to about 200;
the subscript q is zero or positive and has a value ranging from 0 to about 30;
the subscript j is zero or positive and has a value ranging from 0 to about 2;
the subscript n is zero or positive and has a value ranging from 0 to about 20;
the subscript r is zero or positive and has a value ranging from 0 to about 30;
the subscript t is zero or one;
the subscript u is zero or one;
the subscript v is zero or positive and has a value ranging from 0 to about 100 subject to the limitation that (v + w + x) > 0;
the subscript w is zero or positive and has a value ranging from 0 to about 100 subject to the limitation that (v + w + x) > 0;
the subscript x is zero or positive and has a value ranging from 0 to about 100 subject to the limitation that (v + w + x) > 0;
or alternatively where the oxirane or oxetane compound is a hydrocarbon having the formula:

   R²²_{y}(R²³)_{z}(R²⁴_{α})(R²⁵)_{β}

   where R²² and R²⁵ are independently a monovalent hydrocarbon radical containing one or more oxirane or oxetane moieties having from 3 to 12 carbon atoms;
   R²³ and R²⁴ are each selected from the group consisting of H or a linear or branched monovalent hydrocarbon radical of 1 to 200 carbons;
   the subscripts y, z, α, β are zero or positive ranging from zero to four subject to the limitation that (y + β) > 2or alternatively where the oxirane or oxetane compound is a polyether having the formula:

      R²⁶O(R²⁷)_{γ}(C₂H₄O)_{δ}(C₃H₆O)_{ε}(C₄H₈O)_{ζ}R²⁸

      where R²⁶ and R²⁸ are independently a monovalent hydrocarbon radical containing one or more oxirane or oxetane moieties having from 3 to 12 carbon atoms;
      R²⁷ is selected from the group of divalent radicals consisting of-C₂H₄O-, -C₃H₆O-, and -C₄H₈O-;
      the subscript γ is zero or 1;
      the subscript δ is zero or positive and has a value ranging from 0 to about 100 subject to the limitation that (δ + ε + ζ) > 0;
      the subscript ε is zero or positive and has a value ranging from 0 to about 100 subject to the limitation that (δ + ε + ζ) > 0;
      the subscript ζ is zero or positive and has a value ranging from 0 to about 100 subject to the limitation that (δ + ε + ζ) > 0.

Further disclosed herein are reaction products of an epoxy compound and an amino silane further comprising the reaction product of a compound having the formula:

R²⁹(R³⁰)_{κ}Si(OR³¹)_{3-η-θ}(R³²)ₙ(OR³³)_{θ}

where R²⁹ is a monovalent hydrocarbon radical containing one or more oxirane or oxetane moieties having from 3 to 12 carbon atoms;
R³⁰ is a divalent hydrocarbon radical consisting of 1-60 carbons and the subscript κ has a value of zero or 1; R³¹ and R³² are independently selected from the group of monovalent linear or branched hydrocarbon radicals having from 1 to 60 carbon atoms;
the subscript η is zero or positive and has a value ranging from 0 to 3;
the subscript θ is greater than 0 and less than or equal to 3, subject to the limitation that 3- η - θ is greater than or equal to zero;
R³³ is a hydrocarbon radical that contains 3 to 200 carbon atoms.

As used herein the phrase hydrocarbon radical includes hydrocarbon radicals that may be optionally substituted with hetero-atoms particularly nitrogen, oxygen, and sulfur, and may optionally contain ring structures such as oxirane and oxetane groups.

In reacting the oxirane or oxetane compounds with amino bearing compounds, the mole ratio of oxirane or epoxy groups to amino groups is preferably about 1 to about 4, more preferably greater than about 1.1 and less than about 3.9, and most preferably greater than about 1.2 and less than about 3.8. R¹ is preferably a monovalent hydrocarbon radical of from 1 to about 10 carbon atoms or hydrogen, more preferably from 1 to about 5 carbon atoms or hydrogen, most preferably R¹ is H. R² is preferably a monovalent hydrocarbon radical of from 1 to about 10 carbon atoms more preferably 2 to about 8 carbon atoms, and most preferably 3 to about 5 carbon atoms. R⁴ is preferably a monovalent hydrocarbon radical of from 3 to about 10 carbon atoms more preferable 3to about 8 carbon atoms most preferable 3 to about 5 carbon atoms. R³, R⁶, R⁷, and R⁸ are each preferably a monovalent hydrocarbon radical of from 1 to about 20 carbon atoms more preferably 1 to about 15 carbon atoms, most preferably 2 to about 8 carbon atoms. Subscript a is in the range of from 0 to about 3, preferably from about 1 to about 3, more preferably from about 2 to about 3, most preferably from 0 to about 1. Subscript b is in the range of 0 to about 25, more preferably 0 to about 15 and most preferably 3. Subscript c is in the range 0 to about 3, more preferably 0 to about 2, most preferably 0 to about 1. R⁹, R¹⁰, R¹¹, R¹², R¹³, R¹⁸, R¹⁹, R²⁰, and R²¹ are each preferably a monovalent hydrocarbon radical of from 1 to about 4 carbon atoms, more preferably 1 to about 3 carbon atoms, and most preferably 1 carbon atom. The subscripts f, l, m, n, o p, q, r, s are each in the range of 0 to about 200, more preferably 0 to about 100, and most preferably 0 to about 50. The subscript k is in the range of 0 to about500, more preferably 5 to about 250, and most preferably 5 to about 150. The subscripts v, w, and x are each in the range of 0 to about 50, more preferably 0 to about 35, and most preferably 0 to about 25. R²³ and R²⁴ are each preferably a monovalent hydrocarbon radical of from 5 to about 1000 carbon atoms, more preferably 10 to about500, and most preferably 10 to about 300. The subscripts δ, ε, ζ are in the range of 0 to about 50 more preferably, 0 to about 30, and most preferably 0 to about 15. R³¹ and R³² are each preferably a monovalent hydrocarbon radical of from 1 to about 10 carbon atoms, more preferably 1 to about 8 carbon atoms, and most preferably 1 to about 4 carbon atoms. R³³ are each preferably a monovalent hydrocarbon radical of from 3 to about 100 carbon atoms, more preferably 3 to about 50 carbon atoms, most preferably 3 to about 10 carbon atoms.

Reference is made to substances, components, or ingredients in existence at the time just before first contacted, formed in situ, blended, or mixed with one or more other substances, components, or ingredients in accordance with the present disclosure. A substance, component or ingredient identified as a reaction product, resulting mixture, or the like may gain an identity, property, or character through a chemical reaction or transformation during the course of contacting, in situ formation, blending, or mixing operation if conducted in accordance with this disclosure with the application of common sense and the ordinary skill of one in the relevant art (e.g., chemist). The transformation of chemical reactants or starting materials to chemical products or final materials is a continually evolving process, independent of the speed at which it occurs. Accordingly, as such a transformative process is in progress there may be a mix of starting and final materials, as well as intermediate species that may be, depending on their kinetic lifetime, easy or difficult to detect with current analytical techniques known to those of ordinary skill in the art.

Reactants and components referred to by chemical name or formula in the specification or claims hereof, whether referred to in the singular or plural, may be identified as they exist prior to coming into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have utility distinct from the utility of the reaction product or final material. Other subsequent changes, transformations, or reactions may result from bringing the specified reactants and/or components together under the conditions called for pursuant to this disclosure. In these other subsequent changes, transformations, or reactions the reactants, ingredients, or the components to be brought together may identify or indicate the reaction product or final material.

In describing the products of the instant invention as a reaction product of initial materials reference is made to the initial species recited and it is to be noted that additional materials may be added to the initial mixture of synthetic precursors. Non-reactive components may be added to the reaction mixture as diluents or to impart additional properties unrelated to the properties of the composition prepared as a reaction product. Thus for example finely divided solids such as pigments may be dispersed into the reaction mixture, before during or after reaction to produce a reaction product composition that additionally comprises the non-reactive component, e.g. a pigment.

Optionally the reaction of component A with component B can be conducted in the presence of a primary or secondary amine that may or may not possess a reactive alkoxy silane moiety. The result will be a reaction product of A, B, and the primary or secondary amine. Examples of these primary amines are; methylamine, ethylamine, propylamine, ethanol amine, isopropylamine, butylamine, isobutylamine, hexylamine, dodecylamine, oleylamine, aniline aminopropyltrimethylsilane, aminopropyltriethylsilane, aminomorpholine, aminopropyldiethylamine benzylamine, napthylamine 3-amino-9-ethylcarbazole, 1-aminoheptaphlorohexane, 2,2,3,3,4,4,5,5,6,6,7,7,8,8,8-pentadecafluoro-1-octanamine and the like. Examples of secondary amines are; methylethylamine, methylhexylamine, methyloctadecylamine, diethanolamine, dibenzylamine, dihexylamine dicyclohexylamine, piperidine, pyrrolidine phthalimide, and the like. Polymeric amines may also be used such.

### Applications for Embodiments of the Invention

The product of the reaction of A, an oxirane or oxetane polyether possessing two or more oxirane or oxetane groups per molecule and B, an aminosilane, results in a polymer that contains alkoxy silane functional moieties covalently bond to the polymer chain. These alkoxy silane groups may be activated particularly by hydrolysis and undergo further reactions leading to a cross-linked network. The cross-linking mechanism of silanes is usually a two-step process. The first step usually involves the hydrolysis of an alkoxy silane to form silanols. The second step usually involves the condensation of the silanol groups so produced with themselves or with other reactive organic groups. The reaction between two silanol groups leads to a thermally stable siloxane bond. Silanol groups may also condense reversibly with organic moieties such as alcohols, carboxylic acids, amines, mercaptans, and ketones (other reactive groups). The bonds that are formed are less stable than the siloxane bonds. However when a cross-linked network is formed the rate of the reverse reaction may be severely reduced or even stopped.

The compositions of the present invention may be utilized as pure components, mixtures, or emulsions. As is generally known, emulsions comprise at least two immiscible phases one of which is continuous and the other which is discontinuous. Further emulsions may be liquids or gases with varying viscosities or solids. Additionally the particle size of the emulsions may render them microemulsions and when sufficiently small microemulsions may be transparent. Further it is also possible to prepare emulsions of emulsions and these are generally known as multiple emulsions. These emulsions may be:
1) aqueous emulsions where the discontinuous phase comprises water and the continuous phase comprises the composition of the present invention;
2) aqueous emulsions where the discontinuous phase comprises the composition of the present invention and the continuous phase comprises water;
3) non-aqueous emulsions where the discontinuous phase comprises a non-aqueous hydroxylic solvent and the continuous phase comprises the composition of the present invention; and
4) non-aqueous emulsions where the continuous phase comprises a non-aqueous hydroxylic organic solvent and the discontinuous phase comprises the composition of the present invention.

Depending on the choice of component A and component B it is possible to alter the hydrophilic or lipophilic properties of the resulting reaction product. Thus depending on the hydrophilic lipophilic balance, the resulting reaction product may be soluble in polar aqueous or hydroxylic solvents or it may be soluble in non-polar solvents such as oils, low molecular weight siloxanes and silicones and the like.

The hydrophilic lipophilic balance of the resulting reaction product will result in imparting different properties to articles of manufacture depending on the hydrophilic lipophilic balance of the reaction product. For example, a more hydrophilic reaction product may impart hydrophilic properties to one or more surfaces of an article of manufacture such as a textile. Conversely, a more hydrophobic reaction product may impart hydrophobic properties of one or more surfaces of an article of manufacture such as a textile. These hydrophilic or hydrophobic properties are readily measured by standardized tests. As used herein, the word textile encompasses both woven textiles and non-woven textiles made from both natural and man-made fibers. Thus treatment of woven and non-woven textiles with the reaction product of the present invention produces an enhanced response to water of the treated textile either increasing the hydrophilicity or hydrophobicity of the textile so treated as measured by standardized tests.

### Tests for hydrophilic properties

Upon application and curing a reaction product of the present invention to a nonwoven textile, the reaction product coating the material will not migrate as determined by AATCC Test Method 79-1995 such that an adjacent untreated nonwoven textile exhibits a strike-through time greater than 300 seconds.

Upon application and curing a reaction product of the present invention to a nonwoven textile, the resulting treated non-woven textile will exhibit a water height of less than 0.5 cm, more preferably less than 0.4 cm and most preferably less than 0.1 cm when Inda Standard Test IST 80.4 is performed.

Upon application and curing a reaction product of the present invention to a nonwoven textile, the resulting treated material exhibits a strike through time of less than 100 seconds, more preferably less than 50 seconds, and most preferably less than 10 seconds when Edana Strike Through Time 150.3-96 is performed.

Upon application and curing a reaction product of the present invention to a textile the treated textile exhibits a wet out time of less than 50 sec more preferable less than 30 sec most preferably less than 20 sec when AATCC Test Method 79-1992 is performed.

Upon application and curing a reaction product of the present invention to a textile, the treated textile exhibits a wicking value of greater than 10 mm, more preferably greater than 12 mm, and most preferably greater than 15 mm when ASTM D-5237 test protocol is performed.

### Tests for hydrophobic properties

Upon application and curing a reaction product of the present invention to a nonwoven textile, the coating will not migrate following as determined by the a greater than 300 second strike-thorough time of greater than 300 sec of an adjacent untreated nonwoven textile as described in AATCC Test Method 79-1995.

Upon application and curing a reaction product of the present invention to a nonwoven textile, the non-woven material will exhibit a water height greater than 1.0 cm, more preferably greater than 1.2 cm, and most preferably greater than 1.5 cm when Inda Standard Test IST 80.4 is performed.

Upon application and curing a reaction product of the present invention to a nonwoven textile, the non-woven textile will exhibit a strike through time of greater than 300 seconds, more preferably greater than 350 seconds and most preferably greater than 400 seconds when Edana Strike Through Time 150.3-96 is performed.

Upon application and curing a reaction product of the present invention to a textile, the treated textile exhibits a wet out time of greater than 50 seconds, more preferably greater than 100 seconds and most preferably greater than 200 seconds when AATCC Test Method 79-1992 is performed.

Upon application and curing a reaction product of the present invention to a textile, the treated textile exhibits a wicking value of less than 10 mm, more preferably less than 5 mm, and most preferably less than 2 mm when ASTM D-5237 test protocol is performed.

### Experimental

### Synthetic Samples

### Sample A

An epoxy encapped polyether (148.28 g) with the average structure of CH₂(O)CHCH₂O(CH₂CH₂O)₂₂CH₂CH(O)CH₂, aminopropyltriisopropoxysilane (51.72 g) and isopropanol (60.00 g) were combined in a 500 mL round bottom flask. The solution was heat to reflux and stirred with a magnetic stirrer. The reaction was allowed to remain at reflux until all the epoxy groups were consumed as determined by titration. The resulting material exhibited a dark straw color. The material was transferred to a rotary evaporator and stripped at 70°C and 4 torr for 2 hrs to remove the isopropanol.

### Sample B

Aminopropyltriisopropoxy silane (51.72 g), an epoxy encapped polyether with the average structure CH₂(O)CHCH₂(OCH₂CH₂)_{7.3}OCH₂CH(O)CH₂ (148.28 g) and isopropanol (60.00 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample C

Aminopropyltriisopropoxy silane (40.3 g), an epoxy encapped polysiloxane with the average structure CH₂(O)CHCH₂OCH₂CH₂CH₂Si(CH₃)₂O[Si(CH₃)₂O]₅₀Si(CH₃)₂CH₂CH₂CH₂OC H(O)CH₂ (206.12 g) and an epoxy encapped polyether with the average structure CH₂(O)CHCH₂O(CH₂(CH₃)CH₂O)₇CH₂CH(O)CH₂ (18.67 g) and isopropanol (88.48 g) was combined in a 500 mL flask. The material was brought to reflux and stirred with an overhead stirrer. The refluxing continued for 15.5 hr until all epoxy groups were consumed as determined by titration. The material was transferred to a rotary evaporator and stripped at 70°C and 4 torr for 2 hrs to remove the isopropanol.

### Sample D

Aminopropyltriisopropoxy silane (54.27 g), an epoxy encapped polysiloxane with the average structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (185.70 g) and an epoxy encapped polyether with the average structure CH₂(O)CHCH₂O(CH₂CH₂O)₇CH₂CH(O)CH₂ (49.74 g) and isopropanol (507.39 g) was combined in a 1 L flask. The material was brought to reflux and stirred with an overhead stirrer. The refluxing continued for 16 hr until all epoxy groups were consumed as determined by titration. The material was transferred to a rotary evaporator and stripped at 70°C and 4 torr for 2 hrs to remove the isopropanol.

### Sample E

Aminopropyltriisopropoxy silane (53.94 g), Bisphenol A Diglycidyl Ether (46.09 g), and and isopropanol (25.01 g) was combined in a 250 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample F

Aminopropyltriisopropoxy silane (59.22 g), 1,7-diepoxy octane (20.40 g), an epoxy encapped polysiloxane with the average structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (20.41 g) and isopropanol (25.01 g) was combined in a 250 mL flask. The material was brought to reflux and stirred with an overhead stirrer. The refluxing continued for 16 hr until all epoxy groups were consumed as determined by titration. The material was transferred to a rotary evaporator and stripped at 70°C and 4 torr for 2 hrs to remove the isopropanol.

### Sample G

Aminopropyltriisopropoxy silane (41.48 g), 1,6-hexanediol diglycidyl ether (29.43 g), an epoxy encapped polysiloxane with the average structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (29.26 g) and isopropanol (110.01 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample H

Aminopropyltriisopropoxy silane (34.07 g), hydrogenated bisphenol A diglycidyl ether ether (32.98 g), an epoxy encapped polysiloxane with the average structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (32.96 g) and isopropanol (110.08 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample I

Aminopropyltriisopropoxy silane (12.94 g), an epoxy encapped polysiloxane with the average structure CH₂(O)CHCH₂OCH₂CH₂CH₂Si(CH₃)₂O[Si(CH₃)₂O]₂₅-Si(CH₃)₂CH₂CH₂CH₂OCH(O)CH₂ (87.06 g) and isopropanol (30.0 g) was combined in a 250 mL flask. The material was brought to reflux and stirred with an overhead stirrer. The refluxing continued for 16 hr until all epoxy groups were consumed as determined by titration. The material was transferred to a rotary evaporator and stripped at 70°C and 4 torr for 2 hrs to remove the isopropanol. The material obtained was a clear straw colored liquid.

### Sample J

Aminopropyltriisopropoxy silane (27.00 g), an epoxy encapped polysiloxane with the average structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (92.70 g), an epoxy encapped polyether with the average structure CH₂(O)CHCH₂O(CH₂CH₂O)₇CH₂CH(O)CH₂ (27.69 g) and isopropanol (253.43 g) was combined in a 500 mL flask. The material was brought to reflux and stirred with an overhead stirrer. The refluxing continued for 16 hr until all epoxy groups were consumed as determined by titration. The material was transferred to a rotary evaporator and stripped at 70°C and 4 torr for 2 hrs to remove the isopropanol.

### Sample K

Aminopropyltriisopropoxy silane (11.20 g), polybutadiene diglycidyl ether (Mw 3150 g/mol) and isopropanol (100.0 g) was combined in a 500 mL flask. The material was brought to reflux and stirred with an overhead stirrer. The refluxing continued for 23 hr until all epoxy groups were consumed as determined by titration. The material was transferred to a rotary evaporator and stripped at 70°C and 4 torr for 2 hrs to remove the isopropanol. The material obtained was a viscous clear straw colored liquid.

### Sample L

Aminopropyltriisopropoxy silane (75.22 g), an epoxy encapped polyether with the average structure CH₂(O)CHCH₂(OCH₂CH₂)_{6.9}OCH₂CH(O)CH₂ (124.81 g) and isopropanol (60.00 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample M

Aminopropyltriisopropoxy silane (71.31 g), an epoxy encapped polyether with the average structure CH₂(O)CHCH₂(OCH₂CH₂)_{11.7}OCH₂CH(O)CH₂ (128.69 g) and isopropanol (60.00 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample N

Aminopropyltriisopropoxy silane (40.34 g), an epoxy encapped polysiloxane with the average structure CH₂(O)CHCH₂OCH₂CH₂CH₂Si(CH₃)₂O[Si(CH₃)₂O]₅-Si(CH₃)₂CH₂CH₂CH₂OCH(O)CH₂ (9.66 g), an epoxy encapped polyether with the average structure CH₂(O)CHCH₂O(CH₂CH₂O)_{7.7}CH₂CH(O)CH₂ (50.00 g) and isopropanol (21.01 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample O

Aminopropyltriisopropoxy silane (42.90 g), an epoxy encapped polysiloxane with the structure CH₂(O)CHCH₂OCH₂CH₂CH₂Si(CH₃)₂OSi(CH₃)₂CH₂CH₂CH₂OCH(O)CH₂ (7.11 g), an epoxy encapped polyether with the average structure CH₂(O)CHCH₂O(CH₂CH₂O)_{7.7}CH₂CH(O)CH₂ (50.02 g) and isopropanol (20.01 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample P

Aminopropyltriisopropoxy silane (27.00 g), an epoxy encapped polysiloxane with the structure CH₂(O)CHCH₂OCH₂CH₂CH₂Si(CH₃)₂O[Si(CH₃)₂O]₅₀-Si(CH₃)₂CH₂CH₂CH₂OCH(O)CH₂ (52.14 g), an epoxy encapped polyether with the average structure CH₂(O)CHCH₂O(CH₂CH₂O)₉CH₂CH(O)CH₂ (48.60 g) and isopropanol (200.00 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample Q

Aminopropyltriisopropoxy silane (27.00 g), an epoxy encapped polysiloxane with the structure CH₂(O)CHCH₂OCH₂CH₂CH₂Si(CH₃)₂O[Si(CH₃)₂O]₅₀Si(CH₃)₂CH₂CH₂CH₂OC H(O)CH₂ (13.90 g), an epoxy encapped polyether with the average structure CH₂(O)CHCH₂O(CH₂CH₂O)_{7.7}CH₂CH(O)CH₂ (53.69 g) and isopropanol (20.01 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample R

Aminopropyltriisopropoxy silane (71.31 g), an epoxy encapped polyether with the average structure CH₂(O)CHCH₂(OCH₂CH₂)_{11.7}OCH₂CH(O)CH₂ (128.69 g) and isopropanol (60.00 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample S

Aminopropyltriisopropoxy silane (15.02 g), an epoxy encapped polysiloxane with the structure CH₂(O)CHCH₂OCH2CH₂CH₂Si(CH₃)₂O[Si(CH₃)₂O]₁₀₀Si(CH₃)₂CH₂CH₂CH₂O CH(O)CH₂ (98.42 g), an epoxy encapped polyether with the average structure CH₂(O)CHCH₂O(CH2CH₂O)_{21.7}CH₂CH(O)CH₂ (36.56 g) and isopropanol (1500.01 g) was combined in a 500 mL flask. The material was brought to reflux and stirred with an overhead stirrer. The refluxing continued for 24 hr until all epoxy groups were consumed as determined by titration. The material was transferred to a rotary evaporator and stripped at 70°C and 4 torr for 2 hrs to remove the isopropanol.

### Sample T

An epoxy end capped polyether (59.37 g) with the average structure of CH₂(O)CHCH₂O(CH₂CH₂O)_{11.2}CH₂CH(O)CH₂, aminopropyltriisopropoxysilane (24.38 g), aminopropyltriethylsilane (16.25 g) and isopropanol (100 g) were combined in a 500 mL round bottom flask. The solution was heat to reflux and stirred with a magnetic stirrer. The reaction was allowed to remain at reflux until all the epoxy groups were consumed as determined by titration. The resulting material exhibited a dark straw color. The material was transferred to a rotary evaporator and stripped at 70°C and 4 torr for 2 hrs to remove the isopropanol.

### Sample U

An epoxy end capped polyether (34.56 g) with the average structure of CH₂(O)CHCH₂O(CH₂CH₂O)_{11.2}CH₂CH(O)CH₂, aminopropyltriisopropoxysilane (14.75 g), oleylamine (0.70 g) and isopropanol (50 g) were combined in a 250 mL round bottom flask. The solution was heat to reflux and stirred with a magnetic stirrer. The reaction was allowed to remain at reflux until all the epoxy groups were consumed as determined by titration. The resulting material exhibited a dark straw color. The material was transferred to a rotary evaporator and stripped at 70°C and 4 torr for 2 hrs to remove the isopropanol.

### Sample V

An epoxy end capped polyether (34.92 g) with the average structure of CH₂(O)CHCH₂O(CH₂CH₂O)_{11.2}CH₂CH(O)CH₂, aminopropyltriisopropoxysilane (14.58 g), ethylhexylamine (0.49 g) and isopropanol (50 g) were combined in a 250 mL round bottom flask. The solution was heat to reflux and stirred with a magnetic stirrer. The reaction was allowed to remain at reflux until all the epoxy groups were consumed as determined by titration. The resulting material exhibited a dark straw color. The material was transferred to a rotary evaporator and stripped at 70°C and 4 torr for 2 hrs to remove the isopropanol.

### Textile Applications

### Formulations

| | Example Formulation 15 | Example Formulation 16 | Example Formulation 17 | Example Formulation 18 | Comp.Ex. Formulation 19 | Comp.Ex. Formulation 20 |
|---|---|---|---|---|---|---|
| Sample O | 0.5% | - | - | - | - | - |
| Sample P | - | 0.5% | - | - | - | - |
| Sample R | - | - | 0.5% | | - | - |
| Sample L | - | - | - | 0.5% | - | - |
| Sample D | - | - | - | - | 0.5% | - |
| Samples S | - | - | - | - | - | 0.5% |
| Water | 99.5% | 99.5% | 99.5% | 99.5% | 99.5% | 99.5% |

The synthetic example O, P, R or L was combined with deionized water in a beaker, stirred with an overhead stirrer then acidified to pH 5 with acetic acid.

### Formulation and Preparation Procedure for Making a Microemulsion of Control Formulation 2

A 20% microemulsion of Magnasoft Derma NT was made by the addition of 25.0 grams of a commercial polysilicone quat (Momentive Performance Materials) into a disposable beaker to 10.5 grams of TDA-6 and 1.8 grams of TDA-12 (both surfactants made by Ethox). The mixture was stirred using a mechanical stirrer, at moderate speed (∼ 600 rpm) for 5 minutes. Separately a solution of 62.0 grams of deionized water, 0.4 grams of acetic acid, and 0.3 grams of sodium acetate was combined in an addition funnel. The water, acetic acid, and sodium acetate solution was added dropwise over 30 minutes. After the final addition the emulsion was stirrer for an additional 10 minutes.

For treatment in the Pad Bath a dilution of the 20% microemulsion was required. A mechanical stirrer was used and deionized water was added with moderate stirring (∼ 600 rpm) until all the material has been evenly dispersed at an actives concentration of 0.5%.

### Treatment by Pad Bath

The diluted treatments (0.5% actives, 150 g) were poured into a disposable beaker. A piece of untreated fabric was weighed and the mass was recorded. The fabric was immersed in the treating solution for 30 seconds or until completely wet. The saturated fabric was passed through a Werner Mathis padder fitted with 4.5" rubber rollers (roller speed - 6 M/min, roller pressure - 0.5 bar). The fabric was reweighed and the roller pressure was adjusted until 100% wet pick up was achieved. Immediately following the treatment the swatch was placed in a fabric oven at 130°C for 5 minutes to dry the sample.

### Fabric Conditioning

Prior to any physical evaluation of the treated and untreated fabrics, the swatches were placed in an environmental chamber set at 21 °C and 65% RH for a minimum of 24 hours.

### Wet Out

The ability of the treatment to increase (hydrophobicity) or decrease (hydrophilicity) the time required for a drop of water to penetrate the surface of the fabric. This test was performed in accordance with the AATCC Test Method 79-1992. A piece of treated or untreated cotton knit fabric was secured in a 6" embroidery ring. Care was taken as to not stretch the fabric but the fabric was taut and free of folds or wrinkles. A drop of deionized water was applied onto the fabric via a dropper and a timer was started. The timer was stopped when the drop of water completely penetrated the fabric and was record in seconds. The process was repeated 6 times at different positions for each fabric. The value reported is the average of these readings, shown in the table below. The test was terminated at 600 seconds. A value of 600 seconds indicates that the drop never penetrated the surface of the fabric.

| Trial | Comp.Ex. Formulation 15 | Comp.Ex. Formulation 16 | Example Formulation 17 | Example Formulation 18 | Control Formulation 2 | Untreated |
|---|---|---|---|---|---|---|
| 1 | 600 | 80 | 4 | 10 | 10 | 34 |
| 2 | 600 | 21 | 4 | 12 | 10 | 35 |
| 3 | 600 | 74 | 5 | 14 | 12 | 32 |
| 4 | 600 | 32 | 5 | 11 | 12 | 44 |
| 5 | 600 | 145 | 3 | 18 | 12 | 45 |
| 6 | 600 | 92 | 4 | 20 | 13 | 49 |
| Average | 600 | 74 | 4.2 | 14.2 | 11.5 | 39.8 |

The test was repeated for the hydrophobic treatment example formulation 15. Shown in the table are the results when cotton knit fabric is treated and washed. After 1,3,5,10, and 20 washes the fabric was tested for wet out. The fabric remained highly hydrophobic even after 20 washes. The wash/dry procedure is described in the durability section below.

| | Number of Wash Cycles | | | | |
|---|---|---|---|---|---|
| Trial | 1 | 3 | 5 | 10 | 20 |
| 1 | 600 | 600 | 600 | 410 | 125 |
| 2 | 600 | 600 | 600 | 420 | 118 |
| 3 | 600 | 600 | 600 | 335 | 92 |
| 4 | 600 | 600 | 600 | 480 | 130 |
| 5 | 600 | 600 | 600 | 551 | 95 |
| 6 | 600 | 600 | 600 | 458 | 116 |
| Average | 600 | 600 | 600 | 442.3 | 112.7 |

### Wicking

A wicking test was performed in order to evaluate how well the treatments enhance or deter the wicking of water through the fabric. This test was performed in accordance with the ASTM D-5237 test protocol. A 2" X 7" strip of treated or untreated fabric was cut from different sample sheets. One end the fabric was marked with a pencil line -15 mm from the edge. 2 standard metal paper clips were fastened between this line and the edge of the sample. The other end of the fabric was secured a stand with a large (# 100) binder clip. The fabric was immersed up to the pencil line in a beaker of colored water. After 6 minutes the fabric samples were removed from the water and the distance from the pencil line to the final position of the wicked water was measured with a ruler and recorded in millimeters. The procedure was repeated 4 times and the measurement were averaged and given in the table below.

| Trial | Comp.Ex. Formulation 15 | Comp.Ex. Formulation 16 | Comp.Ex. Formulation 19 | Untreated | Control Formulation 2 |
|---|---|---|---|---|---|
| 1 | 15.39 | 76.07 | 0 | 42 | 73.2 |
| 2 | 15.95 | 74.5 | 0 | 40.7 | 73.3 |
| 3 | 12.86 | 72.37 | 0 | 36.4 | 71.9 |
| 4 | 13.15 | 74.1 | 0 | 43 | 72.8 |
| 5 | 12.54 | 72.85 | 0 | 38.9 | 70.3 |
| 6 | 13.53 | 71.67 | 0 | 39.8 | 71.2 |
| Average | 13.9 | 73.6 | 0 | 40.2 | 72.1 |

### Durability (machine wash/dry)

The durability study examined how long the treatment remained on cotton knit fabric after repetitive washing and drying. A treated 11" x 11" swatch of fabric was placed in a top loader washing machine. The machine was set to a regular wash cycle for a wash period of 12 minutes with a 19 gallon water fill and a temp of 87° F. The detergent used was 60 grams of AATCC Standard Reference Detergent. Once washed the fabric swatches were dried by placing them in a front loader dryer set on timed dry, high heat for 30 minutes. The process was repeated for the given number of wash / dry cycles as dictated in the table below. The fabric samples were then exposed to a BF3 digestion and the silicone content was measured using a GC. The values reported are the percent silicone the remains after the number of washes. For the hydrophilic treatments

| Cycles | Control Formulation 2 | Comp.Ex. Formulation 19 |
|---|---|---|
| 0 | 100% | 100% |
| 1 | 49% | 89% |
| 3 | 35% | No Data |
| 5 | 31% | 117% |
| 10 | 23% | 78% |
| 20 | No Data | 72% |

The test was repeated with example formulation 19 on a 50/50 polyester cotton blend, Dacron, and Nylon. The treatment was not removed after 20 washes for the polyester/cotton blend. There was a decrease in the silicone content for the treated Dacron and Nylon.

| | 0 | 1 | 5 | 10 | 20 |
|---|---|---|---|---|---|
| Polyester/Cotton Blend 50/50 | 100% | 77% | 118% | 123% | 114% |
| Dacron | 100% | 20% | 9% | 4% | 1% |
| Nylon | 100% | 19% | 36% | 15% | 22% |

### Spray Test

An alternate test for durability was performed. A Spray Test was run according to AATCC test method 22-1989. Treated cotton knit fabric was washed in the same manner as described in the Durability section above for 1, 3, 5, 10 and 20 wash/dry cycles. The fabric was secured a 6" embroidery ring. Care was taken so that the fabric did not stretch but it was taut and free of folds or wrinkles. The assembly was placed on the spray test apparatus that consisted of stand holding a jig set at a 45° angle positioned below a large funnel and showerhead. 250 mL of deionized water was poured through the funnel and showerhead onto the test specimen. The specimen/ring was removed and visually rated 0-100 by comparing its appearance to the spray test rating standard. The control sample was an untreated piece of cotton knit. The results are shown in the table below. The high numbers of 121-113 indicate that the surface remains hydrophobic even after 20 washes.

| Wash Cycles | Control Formulation 2 | Comp. Ex. Formulation 19 | Untreated |
|---|---|---|---|
| 0 | 75 | 100 | 0 |
| 1 | 50 | 100 | 0 |
| 3 | 10 | 95 | 0 |
| 5 | 0 | 90 | 0 |
| 10 | 0 | 80 | 0 |
| 20 | 0 | 80 | 0 |

### Hand (soft / bulk / slick)

A panel of 5 people was designated to determine the softness and bulkiness that the treatment imparts to cotton knit fabric. The test panels were asked to rate the softness of the fabric from 1 to 10. An untreated swatch of fabric was used to indicate a 1. A high value indicates a very soft and pleasant feel. Most of the formulations tested performed well against the untreated control.

| Treatment | Rating |
|---|---|
| Untreated | 1 |
| Control Formulation 2 | 7.7 |
| Example Formulation 18 | 1 |
| Comp.Ex. Formulation 20 | 7.3 |
| Comp.Ex. Formulation 15 | 6.4 |
| Comp.Ex. Formulation 19 | 6.9 |

The foregoing examples are merely illustrative of the invention, serving to illustrate only some of the features of the present invention. The appended claims are intended to claim the invention as broadly as it has been conceived and the examples herein presented are illustrative of selected embodiments from a manifold of all possible embodiments. Accordingly it is Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. Such ranges may be viewed as a Markush group or a collection of Markush groups consisting of differing pairwise numerical limitations which group or groups is or are fully delimited by its lower and upper bounds, increasing in a regular fashion numerically from lower bounds to upper bounds. It is to be expected that variations in these ranges will suggest themselves to a practitioner having ordinary skill in the art and where not already dedicated to the public. It is also anticipated that advances in science and technology will make equivalents and substitutions possible that are not now contemplated by reason of the imprecision of language.

## Claims

1. A textile treated with a composition comprising the reaction product obtained from the reaction the following two components:
(a) a polyether comprising at least two oxirane or oxetane groups, wherein the polyether has the formula:
R²⁶O(R²⁷)_{γ}(C₂H₄O)_{δ}(C₃H₆O)_{ε}(C₄H₈O)_{ζ}R²⁸
where
R²⁶ and R²⁸ are independently a monovalent hydrocarbon radical containing one or more oxirane or oxetane moieties having from 3 to 12 carbon atoms;
R²⁷ is selected from the group of divalent radicals consisting of -C₂H₄O-, -C₃H₆O-, and -C₄H₈O-;
the subscript γ is zero or 1;
the subscript δ is zero or positive and has a value ranging from 0 to about 100 subject to the limitation that (δ + ε + ζ) > 0;
the subscript ε is zero or positive and has a value ranging from 0 to about 100 subject to the limitation that (δ + ε + ζ) > 0; and
the subscript ζ is zero or positive and has a value ranging from 0 to about 100 subject to the limitation that (δ + ε + ζ) > 0; and
(b) an amino silane having the formula:
N(H)(R¹)R²Si(OR³)_{3-a-b-c}(OR⁴)ₐ(R⁵Si(OR⁶)_{d}(R⁷)ₑ)_{b}R⁸_{c}
with
R¹ is chosen from the group consisting of H or a monovalent hydrocarbon radical containing one to 20 carbon atoms;
R² is selected from a group consisting of a divalent linear or branched hydrocarbon radical consisting of 1-60 carbons;
R⁴ is a hydrocarbon radical that contains 3 to 200 carbon atoms;
R⁵ is selected from a group consisting of oxygen or a divalent linear or branched hydrocarbon radical consisting of 1-60 carbons;
R³, R⁶, R⁷, and R⁸ and are each independently selected from the group of monovalent linear or branched hydrocarbon radicals having from 1 to 200 carbon atoms;
the subscript b is zero or a positive number and has a value ranging from 0 to 3;
the subscripts a, and c are zero or positive and have a value ranging from 0 to 3 subject to the limitation that (a + b + c) ≤ 3; and
the subscripts d and e are zero or positive and have a value ranging from 0 to 3 subject to the limitation that (d + e) ≤ 3.

2. The textile of claim 1 wherein R¹ has from one to ten carbon atoms; R² has from one to ten carbon atoms; R⁴ has from three to ten carbon atoms; R³, R⁶, R⁷, and R⁸ each independently have from one to twenty carbon atoms; the subscript a ranges from 1 to 3; the subscript b ranges from 0 to 25; and the subscript c ranges from 0 to 3.

3. The textile of claim 1 wherein subscripts δ, ε, ζ each independently range from 0 to 50.

4. A method for treating a textile, comprising the steps of
(i) applying to the textile a composition comprising the reaction product obtained from the reaction the following two components:
(a) a polyether comprising at least two oxirane or oxetane groups, wherein the polyether has the formula:
R²⁶O(R²⁷)_{γ}(C₂H₄O)_{δ}(C₃H₆O)_{ε}(C₄H₈O)_{ζ}R²⁸
where
R²⁶ and R²⁸ are independently a monovalent hydrocarbon radical containing one or more oxirane or oxetane moieties having from 3 to 12 carbon atoms;
R²⁷ is selected from the group of divalent radicals consisting of -C₂H₄O-, -C₃H₆O-, and -C₄H₈O-;
the subscript γ is zero or 1;
the subscript δ is zero or positive and has a value ranging from 0 to about 100 subject to the limitation that (δ + ε + ζ) > 0;
the subscript ε is zero or positive and has a value ranging from 0 to about 100 subject to the limitation that (δ + ε + ζ) > 0; and
the subscript ζ is zero or positive and has a value ranging from 0 to about 100 subject to the limitation that (δ + ε + ζ) > 0; and
(b) an amino silane having the formula:
N(H)(R¹)R²Si(OR³)_{3-a-b-c}(OR⁴)ₐ(R⁵Si(OR⁶)_{d}(R⁷)ₑ)_{b}R⁸_{c}
with
R¹ is chosen from the group consisting of H or a monovalent hydrocarbon radical containing one to 20 carbon atoms;
R² is selected from a group consisting of a divalent linear or branched hydrocarbon radical consisting of 1-60 carbons;
R⁴ is a hydrocarbon radical that contains 3 to 200 carbon atoms;
R⁵ is selected from a group consisting of oxygen or a divalent linear or branched hydrocarbon radical consisting of 1-60 carbons;
R³, R⁶, R⁷, and R⁸ and are each independently selected from the group of monovalent linear or branched hydrocarbon radicals having from 1 to 200 carbon atoms;
the subscript b is zero or a positive number and has a value ranging from 0 to 3;
the subscripts a, and c are zero or positive and have a value ranging from 0 to 3 subject to the limitation that (a + b + c) ≤ 3;
the subscripts d and e are zero or positive and have a value ranging from 0 to 3 subject to the limitation that (d + e) ≤ 3, and
(ii) curing.

5. The method of claim 4 wherein R¹ has from one to ten carbon atoms; R² has from one to ten carbon atoms; R⁴ has from three to ten carbon atoms; R³, R⁶, R⁷, and R⁸ each independently have from one to twenty carbon atoms; the subscript a ranges from 1 to 3; the subscript b ranges from 0 to 25; and the subscript c ranges from 0 to 3.

6. The method of claim 4 wherein subscripts δ, ε, ζ each independently range from 0 to 50.

7. The method of claim 4 wherein the composition which is applied to the textile is an aqueous emulsion where the continuous or discontinuous phase comprises water and the emulsion comprises the reaction product.

8. The method of claim 4 wherein the composition which is applied to the textile is a non-aqueous emulsion where the continuous or discontinuous phase comprises a non-aqueous hydroxylic solvent and the emulsion comprises the reaction product.

## Patentansprüche

1. Textilie, welche mit einer Zusammensetzung behandelt ist, die das aus der Reaktion der folgenden zwei Komponenten erhaltene Reaktionsprodukt umfasst:
(a) eines Polyethers, welcher mindestens zwei Oxiran- oder Oxetan-Gruppen umfasst, wobei der Polyether folgende Formel aufweist:
R²⁶O(R²⁷)_{γ}(C₂H₄O)_{δ}(C₃H₆O)_{ε}(C₄H₈O)_{ζ}R²⁸
wobei
R²⁶ und R²⁸ unabhängig ein monovalentes Kohlenwasserstoffradikal sind, das ein oder mehr Oxiran- oder Oxetan-Anteile mit 3 bis 12 Kohlenstoffatomen enthält;
R²⁷ gewählt ist aus der Gruppe von bivalenten Radikalen bestehend aus -C₂H₄O-, -C₃H₆O- und -C₄H₈O-;
die Tieferstellung γ null oder 1 ist;
die Tieferstellung δ null oder positiv ist und einen von 0 bis etwa 100 reichenden Wert hat, vorbehaltlich der Einschränkung, dass (δ + ε + ζ) > 0;
die Tieferstellung ε null oder positiv ist und einen von 0 bis etwa 100 reichenden Wert hat, vorbehaltlich der Einschränkung, dass (δ + ε + ζ) > 0; und
die Tieferstellung ζ null oder positiv ist und einen von 0 bis etwa 100 reichenden Wert hat, vorbehaltlich der Einschränkung, dass (δ + ε + ζ) > 0; und
(b) eines Aminosilans mit der Formel:
N(H)(R¹)R²Si(OR**³)**_{**3**-a-b-c}(OR**⁴**)ₐ(R⁵Si(OR⁶)_{d}(R⁷)ₑ)_{b}R⁸_{c}
wobei
R¹ gewählt ist aus der Gruppe bestehend aus H oder einem monovalenten Kohlenwasserstoffradikal, das ein bis 20 Kohlenstoffatome enthält;
R² gewählt ist aus einer Gruppe bestehend aus einem bivalenten linearen oder verzweigten Kohlenwasserstoffradikal, das aus 1-60 Kohlenstoffen besteht;
R⁴ ein Kohlenwasserstoffradikal ist, das 3 bis 200 Kohlenstoffatome enthält;
R⁵ gewählt ist aus einer Gruppe bestehend aus Sauerstoff oder einem bivalenten linearen oder verzweigten Kohlenwasserstoffradikal, das aus 1-60 Kohlenstoffen besteht;
R³, R⁶, R⁷ und R⁸ jeweils unabhängig gewählt sind aus der Gruppe von monovalenten linearen oder verzweigten Kohlenwasserstoffradikalen mit 1 bis 200 Kohlenstoffatomen;
die Tieferstellung b null oder eine positive Zahl ist und einen von 0 bis 3 reichenden Wert hat;
die Tieferstellungen a und c null oder positiv sind und einen von 0 bis 3 reichenden Wert haben, vorbehaltlich der Einschränkung, dass (a + b + c) ≤ 3; und
die Tieferstellungen d und e null oder positiv sind und einen von 0 bis 3 reichenden Wert haben, vorbehaltlich der Einschränkung, dass (d + e) ≤ 3.

2. Textilie nach Anspruch 1, wobei R¹ ein bis zehn Kohlenstoffatome aufweist; R² ein bis zehn Kohlenstoffatome aufweist; R⁴ drei bis zehn Kohlenstoffatome aufweist; R³, R⁶, R⁷ und R⁸ jeweils unabhängig ein bis zwanzig Kohlenstoffatome aufweisen; die Tieferstellung a von 1 bis 3 reicht; die Tieferstellung b von 0 bis 25 reicht; und die Tieferstellung c von 0 bis 3 reicht.

3. Textilie nach Anspruch 1, wobei Tieferstellungen δ, ε, ζ jeweils unabhängig von 0 bis 50 reichen.

4. Verfahren zum Behandeln einer Textilie, welches die folgenden Schritte umfasst:
(i) Aufbringen einer Zusammensetzung, welche das Reaktionsprodukt umfasst, das aus der Reaktion der folgenden zwei Komponenten erhalten wird, auf die Textilie:
(a) eines Polyethers mit mindestens zwei Oxiran- oder Oxetan-Gruppen, wobei der Polyether die folgende Formel aufweist:
R²⁶O(R²⁷)_{γ}(C₂H₄O)_{δ}(C₃H₆O)_{ε}(C₄H₈O)_{ζ}R²⁸
wobei
R²⁶ und R²⁸ unabhängig ein monovalentes Kohlenwasserstoffradikal sind, das ein oder mehr Oxiran- oder Oxetan-Anteile mit 3 bis 12 Kohlenstoffatomen enthält;
R²⁷ gewählt ist aus der Gruppe von bivalenten Radikalen bestehend aus -C₂H₄O-, -C₃H₆O- und -C₄H₈O-;
die Tieferstellung γ null oder 1 ist;
die Tieferstellung δ null oder positiv ist und einen von 0 bis etwa 100 reichenden Wert hat, vorbehaltlich der Einschränkung, dass (δ + ε + ζ) > 0;
die Tieferstellung ε null oder positiv ist und einen von 0 bis etwa 100 reichenden Wert hat, vorbehaltlich der Einschränkung, dass (δ + ε + ζ) > 0; und
die Tieferstellung ζ null oder positiv ist und einen von 0 bis etwa 100 reichenden Wert hat, vorbehaltlich der Einschränkung, dass (δ + ε + ζ) > 0; und
(b) eines Aminosilans mit der Formel:
N(H)(R¹)R²Si(OR³)_{3-a-b-c}(OR⁴)ₐ(R⁵Si(OR⁶)_{d}(R⁷)ₑ)_{b}R⁸_{c}
wobei
R¹ gewählt ist aus der Gruppe bestehend aus H oder einem monovalenten Kohlenwasserstoffradikal, das ein bis 20 Kohlenstoffatome enthält;
R² gewählt ist aus einer Gruppe bestehend aus einem bivalenten linearen oder verzweigten Kohlenwasserstoffradikal, das aus 1-60 Kohlenstoffen besteht;
R⁴ ein Kohlenwasserstoffradikal ist, das 3 bis 200 Kohlenstoffatome enthält;
R⁵ gewählt ist aus einer Gruppe bestehend aus Sauerstoff oder einem bivalenten linearen oder verzweigten Kohlenwasserstoffradikal, das aus 1-60 Kohlenstoffen besteht;
R³, R⁶, R⁷ und R⁸ jeweils unabhängig gewählt sind aus der Gruppe von monovalenten linearen oder verzweigten Kohlenwasserstoffradikalen mit 1 bis 200 Kohlenstoffatomen;
die Tieferstellung b null oder eine positive Zahl ist und einen von 0 bis 3 reichenden Wert hat;
die Tieferstellungen a und c null oder positiv sind und einen von 0 bis 3 reichenden Wert haben, vorbehaltlich der Einschränkung, dass (a + b + c) ≤ 3;
die Tieferstellungen d und e null oder positiv sind und einen von 0 bis 3 reichenden Wert haben, vorbehaltlich der Einschränkung, dass (d + e) ≤ 3 und
(ii) Härten.

5. Verfahren nach Anspruch 4, wobei R¹ ein bis zehn Kohlenstoffatome aufweist; R² ein bis zehn Kohlenstoffatome aufweist; R⁴ drei bis zehn Kohlenstoffatome aufweist; R³, R⁶, R⁷ und R⁸ jeweils unabhängig ein bis zwanzig Kohlenstoffatome aufweisen; die Tieferstellung a von 1 bis 3 reicht; die Tieferstellung b von 0 bis 25 reicht; und die Tieferstellung c von 0 bis 3 reicht.

6. Verfahren nach Anspruch 4, wobei Tieferstellungen δ, ε, ζ jeweils unabhängig von 0 bis 50 reichen.

7. Verfahren nach Anspruch 4, wobei die Zusammensetzung, die auf die Textilie aufgebracht wird, eine wässrige Emulsion ist, wobei die kontinuierliche oder diskontinuierliche Phase Wasser umfasst und die Emulsion das Reaktionsprodukt umfasst.

8. Verfahren nach Anspruch 4, wobei die Zusammensetzung, die auf die Textilie aufgebracht wird, eine nicht-wässrige Emulsion ist, wobei die kontinuierliche oder diskontinuierliche Phase ein nicht-wässriges Hydroxyl-Lösungsmittel umfasst und die Emulsion das Reaktionsprodukt umfasst.

## Revendications

1. Textile traité par une composition comprenant le produit de réaction obtenu à partir de la réaction des deux composants suivants :
(a) un polyéther comprenant au moins deux groupes oxirane ou oxétane, le polyéther ayant la formule :
R²⁶O(R²⁷)_{γ}(C₂H₄O)_{δ}(C₃H₆O)_{ε}(C₄H₈O)_{ζ}R²⁸
dans laquelle
R²⁶ et R²⁸ sont indépendamment un radical hydrocarbure monovalent contenant un ou plusieurs fragments oxirane ou oxétane ayant de 3 à 12 atomes de carbone ;
R²⁷ est choisi dans le groupe de radicaux divalents constitué de -C₂H₄O-, -C₃H₆O- et -C₄H₈O- ;
l'indice γ est nul ou est égal à 1 ;
l'indice δ est nul ou positif et a une valeur allant de 0 à environ 100 en respectant la restriction selon laquelle (δ + ε + ζ) > 0 ;
l'indice ε est nul ou positif et a une valeur allant de 0 à environ 100 en respectant la restriction selon laquelle (δ + ε + ζ) > 0 ; et
l'indice ζ est nul ou positif et a une valeur allant de 0 à environ 100 en respectant la restriction selon laquelle (δ + ε + ζ) > 0 ; et
(b) un aminosilane de formule :
N(H)(R¹)R²Si(OR**³)**_{**3**-a-b-c}(OR**⁴**)ₐ(R⁵Si(OR⁶)_{d}(R⁷)ₑ)_{b}R⁸_{c}
où
R¹ est choisi dans le groupe constitué de H ou d'un radical hydrocarbure monovalent contenant de un à 20 atomes de carbone ;
R² est choisi dans le groupe constitué d'un radical hydrocarbure linéaire ou ramifié divalent constitué de 1 à 60 carbones ;
R⁴ est un radical hydrocarbure qui contient de 3 à 200 atomes de carbone ;
R⁵ est choisi dans le groupe constitué d'oxygène ou d'un radical hydrocarbure linéaire ou ramifié divalent constitué de 1 à 60 carbones ;
R³, R⁶, R⁷ et R⁸ sont choisis chacun indépendamment dans le groupe de radicaux hydrocarbures monovalents linéaires ou ramifiés ayant de1 à 200 atomes de carbone ;
l'indice b est nul ou un nombre positif et a une valeur allant de 0 à 3 ;
les indices a et c sont nuls ou positifs et ont une valeur allant de 0 à 3 en respectant la restriction selon laquelle (a + b + c) ≤ 3 ; et
les indices d et e sont nuls ou positifs et ont une valeur allant de 0 à 3 en respectant la restriction selon laquelle (d + e) ≤ 3.

2. Textile selon la revendication 1 où R¹ a de un à dix atomes de carbone ; R² a de un à dix atomes de carbone ; R⁴ a de trois à dix atomes de carbone ; R³, R⁶, R⁷ et R⁸ ont chacun indépendamment de un à vingt atomes de carbone ; l'indice a va de 1 à 3 ; l'indice b va de 0 à 25 ; et l'indice c va de 0 à 3.

3. Textile selon la revendication 1 où les indices δ, ε, ζ vont chacun indépendamment de 0 à 50.

4. Procédé pour traiter un textile, comprenant les étapes consistant à
(i) appliquer au textile une composition comprenant le produit de réaction obtenu à partir de la réaction des deux composants suivants :
(a) un polyéther comprenant au moins deux groupes oxirane ou oxétane, où
le polyéther est de formule :
R²⁶O(R²⁷)_{γ}(C₂H₄O)_{δ}(C₃H₆O)_{ε}(C₄H₈O)_{ζ}R²⁸
dans laquelle
R²⁶ et R²⁸ sont indépendamment un radical hydrocarbure monovalent contenant un ou plusieurs fragments oxirane ou oxétane ayant de 3 à 12 atomes de carbone ;
R²⁷ est choisi dans le groupe de radicaux divalents constitué de -C₂H₄O-, -C₃H₆O- et -C₄H₈O- ;
l'indice γ est nul ou est égal à 1 ;
l'indice δ est nul ou positif et a une valeur allant de 0 à environ 100 en respectant la restriction selon laquelle (δ + ε + ζ) > 0 ;
l'indice ε est nul ou positif et a une valeur allant de 0 à environ 100 en respectant la restriction selon laquelle (δ + ε + ζ) > 0 ;
l'indice ζ est nul ou positif et a une valeur allant de 0 à environ 100 en respectant la restriction selon laquelle (δ + ε + ζ) > 0 ; et
(b) un aminosilane de formule :
N(H)(R¹)R²Si(OR³)_{3-a-b-c}(OR⁴)ₐ(R⁵Si(OR⁶)_{d}(R⁷)ₑ)_{b}R⁸_{c}
où
R¹ est choisi dans le groupe constitué de H ou d'un radical hydrocarbure monovalent contenant de un à 20 atomes de carbone ;
R² est choisi dans le groupe constitué d'un radical hydrocarbure linéaire ou ramifié divalent constitué de 1 à 60 carbones ;
R⁴ est un radical hydrocarbure qui contient de 3 à 200 atomes de carbone ;
R⁵ est choisi dans le groupe constitué d'oxygène ou d'un radical hydrocarbure linéaire ou ramifié divalent constitué de 1 à 60 carbones ;
R³, R⁶, R⁷ et R⁸ sont choisis chacun indépendamment dans le groupe de radicaux hydrocarbures monovalents linéaires ou ramifiés ayant de1 à 200 atomes de carbone ;
l'indice b est nul ou un nombre positif et a une valeur allant de 0 à 3 ;
les indices a et c sont nuls ou positifs et ont une valeur allant de 0 à 3 en respectant la restriction selon laquelle (a + b + c) ≤ 3 ;
les indices d et e sont nuls ou positifs et ont une valeur allant de 0 à 3 en respectant la restriction selon laquelle (d + e) ≤ 3 ; et
(ii) effectuer un durcissement.

5. Procédé selon la revendication 4 dans lequel R¹ a de un à dix atomes de carbone ; R² a de un à dix atomes de carbone ; R⁴ a de trois à dix atomes de carbone ; R³, R⁶, R⁷ et R⁸ ont chacun indépendamment de un à vingt atomes de carbone ; l'indice a va de 1 à 3 ; l'indice b va de 0 à 25 ; et l'indice c va de 0 à 3.

6. Procédé selon la revendication 4 dans lequel
les indices δ, ε, ζ vont chacun indépendamment de 0 à 50.

7. Procédé selon la revendication 4 dans lequel
la composition qui est appliquée au textile est une émulsion aqueuse dans laquelle la phase continue ou discontinue comprend de l'eau et l'émulsion comprend le produit de réaction.

8. Procédé selon la revendication 4 dans lequel
la composition qui est appliquée au textile est une émulsion non aqueuse dans laquelle la phase continue ou discontinue comprend un solvant hydroxylique non aqueux et l'émulsion comprend le produit de réaction.
